# EUROPÄISCHE PATENTSCHRIFT

(11) **EP 1 505 111 B1**
(45) Veröffentlichungstag und Bekanntmachung des Hinweises auf die Patenterteilung: **08.08.2012**
(21) Anmeldenummer: 04102457.1
(22) Anmeldetag: 02.06.2004
(51) Int. Cl.: C08K 5/5317, B29C 67/00, B29C 67/04, C08L 77/00, C08L 77/02, C08L 77/06, C08K 5/00

(54) **Polymerpulver mit phosphonatbasierendem Flammschutzmittel, Verfahren zu dessen Herstellung und Formkörper, hergestellt aus diesem Polymerpulver**
Polyamide powder containing phosphonate based fire retardant, production process thereof and molded objects therefrom
Poudre de polyamide contenent un agent ignifugeant du type phosphonate, son procédé de préparation et objets moulés obtenus à partir de celle-ci

(30) Priorität: 29.07.2003 DE 10334497
(43) Veröffentlichungstag der Anmeldung: 09.02.2005
(73) Patentinhaber: Evonik Degussa GmbH, 45128 Essen (DE)
(72) Erfinder: Monsheimer, Sylvia, 45721, Haltern am See (DE); Grebe, Maik, 44805, Bochum (DE); Baumann, Franz-Erich, 48249, Dülmen (DE)

(56) Entgegenhaltungen:
- EP-A- 0 659 816
- EP-A- 0 911 142
- WO-A-98/39381

## Beschreibung

Die Erfindung betrifft ein Polymerpulver auf Basis von Polyamid oder Coployamiden, vorzugsweise Polyamid 12, welches phosphonatbasierendes Flammschutzmittel aufweist, ein Verfahren zur Herstellung dieses Pulvers sowie Formkörper, hergestellt durch schichtweise arbeitende Verfahren, bei denen selektiv Bereiche aufgeschmolzen oder miteinander verbunden werden, aus diesem Pulver. Bei den schichtweise arbeitenden Verfahren handelt es sich um selektive Laser-Sintern-Verfahren.

Die zügige Bereitstellung von Prototypen ist eine in der jüngsten Zeit häufig gestellte Aufgabe. Ein Verfahren, welches besonders gut für den Zweck des Rapid Prototypings geeignet ist, ist das selektive Laser-Sintern. Bei diesem Verfahren werden Kunststoffpulver in einer Kammer selektiv kurz mit einem Laserstrahl belichtet, wodurch die Pulver-Partikel, die von dem Laserstrahl getroffen werden, schmelzen. Die geschmolzenen Partikel verlaufen ineinander und erstarren schnell wieder zu einer festen Masse. Durch wiederholtes Belichten von immer neu aufgebrachten Schichten können mit diesem Verfahren dreidimensionale Körper auch komplexer Geometrie einfach und schnell hergestellt werden.

Das Verfahren des Laser-Sinterns (Rapid Prototyping) zur Darstellung von Formkörpern aus pulverförmigen Polymeren wird ausführlich in den Patentschriften US 6,136,948 und WO 96/06881 (beide DTM Corporation) beschrieben. Eine Vielzahl von Polymeren und Copolymeren wird für diese Anwendung beansprucht, wie z.B. Polyacetat, Polypropylen, Polyethylen, Ionomere und Polyamid.

In der Praxis hat sich beim Laser-Sintern vor allem Polyamid 12-Pulver (PA 12) für die Herstellung von Formkörpern, insbesondere von technischen Bauteilen bewährt Die aus PA 12 Pulver gefertigten Teile genügen den hohen Anforderungen, die bezüglich der mechanischen Beanspruchung gestellt werden und kommen damit in ihren Eigenschaften besonders nahe an die späteren Serienteile, die durch Extrusion oder Spritzgießen erstellt werden.

Gut geeignet ist dabei ein PA 12-Pulver mit einer mittleren Korngröße (d₅₀) von 50 bis 150 µm, wie man es beispielsweise gemäß DE 197 08 946 oder auch DE 44 21 454 erhält. Vorzugsweise wird dabei ein Polyamid 12 Pulver mit einer Schmelztemperatur von 185 bis 189 °C, einer Schmelzenthalpie von 112 J/g und einer Erstarrungstemperatur von 138 bis 143 °C, wie es in EP 0 911 142 beschrieben.

Andere gut geeignete Verfahren sind das SIV-Verfahren wie in WO 01/38061 beschrieben, oder ein Verfahren wie in EP 1015214 beschrieben. Beide arbeiten mit einer flächigen Infrarotheizung zum Aufschmelzen des Pulvers, die Selektivität wird bei ersterem durch die Auftragung eines Inhibitors erreicht, beim zweiten durch eine Maske. Ein weiteres Verfahren, welches große Akzeptanz im Markt gefunden hat, ist das 3D-Printing nach EP 0 431924; dort entstehen die Formkörper durch Aushärten eines selektiv auf die Pulverschicht aufgetragenen Binders. Ein weiteres Verfahren ist in DE 10311438 beschrieben; da wird die zum Verschmelzen benötigte Energie durch einen Mikrowellengenerator eingebracht und die Selektivität wird durch Auftragen eines Suszeptors erreicht.

Für diese Verfahren können pulverförmige Substrate, insbesondere Polymere oder Copolymere, vorzugsweise ausgewählt aus Polyester, Polyvinylchrlorid, Polyacetal, Polypropylen, Polyethylen, Polystyrol, Polycarbonat, Poly-(N-methylmethycrylimide) (PMMI), Polymethylmethacrylat (PMMA), Ionomer, Polyamid, Copolyester, Copolyamide, Terpolymere, Acrylnitril-Butadien-Styrol-Copolymere (ABS) oder Gemische davon eingesetzt werden.

Trotz der bereits guten Eigenschaften der bekannten Polymerpulver weisen mit solchen Pulvern hergestellte Formkörper noch immer einige Nachteile auf. Nachteilig bei den derzeit eingesetzten Polymerpulvern sind insbesondere ihre leichte Entflamm- und Brennbarkeit. Das verhindert derzeit den Einsatz oben beschriebener Verfahren für den Einsatz in Kleinserien beispielsweise im Flugzeugbau.

Aufgabe der vorliegenden Erfindung war es deshalb, ein Polymerpulver bereitzustellen, welches eine schlechtere Entflammbarkeit der daraus mit einem der oben beschriebenen Verfahren hergestellten Teile ermöglicht. Insbesondere soll dabei eine Einstufung nach V0 gemäß UL erreicht werden.

Überraschenderweise wurde nun gefunden, dass sich durch Zugabe von phosphonathaltigen Flammschutzmitteln zu Polymeren Polymerpulver herstellen lassen, aus denen sich Formkörper durch schichtweise arbeitende Verfahren, bei denen selektiv Bereiche verschmolzen oder verbunden werden, produzieren lassen, die deutlich deutlich bessere Einstufung nach UL erreichen als Formkörper aus herkömmlichen Polymerpulvern. Dadurch kann z.B. eine Einstufung nach UL-V0 erreicht werden. Besonders vorteilhaft ist es, wenn gleichzeitig die mechanischen Eigenschaften der Bauteile erhalten bleiben. Gegenstand der Erfindung sind Polymerpulver gemäss den Ansprüchen 1-10, Verfahren zur Herstellung des Polymerpulvern gemäß den Ansprüchen 11-14; Verfahren zur Herstellung von Formkörpern gemäss Anspruch 15, sowie Formkörper gemäß den Ansprüchen 16-21.

Gegenstand der vorliegenden Erfindung ist deshalb ein Polymerpulver zur Verarbeitung in einem schichtweise arbeitenden Verfahren, bei dem Bereiche selektiv aufgeschmolzen oder miteinander verbunden werden, welches dadurch gekennzeichnet ist, dass das Pulver zumindest ein Polyamidpulver und zumindest ein phosphonathaltiges Flammschutzmittel aufweist.

Ebenso ist Gegenstand der vorliegenden Erfindung ein Verfahren zur Herstellung von erfindungsgemäßem Polymerpulver, welches dadurch gekennzeichnet ist, dass zumindest ein Polyamidpulver in Gegenwart eines Lösungsmittels, in welchem das phosphonathaltige Flammschutzmittel zumindest eine geringe Löslichkeit aufweist, vermischt wird und man das Dispergier-/Lösemittel anschließend wieder entfernt. Es versteht sich von selbst, dass die Schmelztemperaturen der einzusetzenden Flammschutzmittel oberhalb Raumtemperatur liegen müssen.

Außerdem sind Gegenstand der vorliegenden Erfindung Formkörper, hergestellt durch ein schichtweise arbeitendes Verfahren, bei dem selektiv Bereiche aufgeschmolzen oder miteinander verbunden werden, welche dadurch gekennzeichnet sind, dass sie phosphonathaltige Flammschutzmittel und zumindest ein Polyamid beinhalten.

Das erfindungsgemäße Polymerpulver hat den Vorteil, dass aus ihm durch ein schichtweise arbeitendes Verfahren, bei dem selektiv Bereiche aufgeschmolzen oder miteinander verbunden werden, hergestellte Formkörper, die schwer entflammbar und brennbar sind, erzeugt werden können. Es sind deshalb Formkörper zugänglich, die eine Einstufung nach UL (Underwriter Laboratories) V0 erreichen. Durch Zugabe von Flammschutzmitteln werden meist die mechanischen Eigenschaften der Formkörper verschlechtert. Die erfindungsgemäßen Formkörper weisen immerhin noch eine gute Reißdehnung und einen nur leicht verminderten Elastizitätsmodul gegenüber Formkörpern aus nicht flammgeschützt ausgerüstetem Material auf. Damit eröffnen sich Anwendungsbereiche, die bisher aufgrund der schlechten Einstufung, was die Brennbarkeit angeht, nicht möglich waren.

Das erfindungsgemäße Polymerpulver zur Verarbeitung in einem schichtweise arbeitenden Verfahren, bei dem selektiv Bereiche aufgeschmolzen oder miteinander verbunden werden, zeichnet sich dadurch aus, dass das Pulver zumindest ein Polyamid oder Copolyamid und zumindest ein phosphonathaltiges Flammschutzmittel, aufweist.

Als Polyamid weist das erfindungsgemäße Polymerpulver vorzugsweise ein Polyamid auf, welches pro Carbonamid-Gruppe mindestens 8 Kohlenstoffatome aufweist. Bevorzugt weist das erfindungsgemäße Polymerpulver mindestens ein Polyamid auf, welches 10 oder mehr Kohlenstoffatome pro Carbonamid-Gruppe aufweist. Ganz besonders bevorzugt weist das Polymerpulver zumindest ein Polyamid, ausgewählt aus Polyamid 612 (PA 612), Polyamid 11 (PA 11) und Polyamid 12 (PA 12), auf.

Das erfindungsgemäße Polymerpulver weist vorzugsweise Polyamid mit einer mittleren Partikelgröße von 10 bis 250 µm, vorzugsweise von 45 bis 100 µm und besonders bevorzugt von 50 bis 80 µm auf

Für das Lasersintern ist insbesondere ein Polyamid 12 Polymerpulver geeignet, welches eine Schmelztemperatur von 185 bis 189 °C, vorzugsweise von 186 bis 188 °C, eine Schmelzenthalpie von 112 ± 17 J/g, vorzugsweise von 100 bis 125 J/g und eine Erstarrungstemperatur von 133 bis 148 °C, vorzugsweise von 139 bis 143 °C aufweist. Der Prozess für die Herstellung für die den erfindungsgemäßen Polymerpulvern zugrunde liegenden Polyamidpulver ist allgemein bekannt und kann im Fall von PA 12 z.B. den Schriften DE 29 06 647, DE 35 10 687, DE 35 10 691 und DE 44 21 454, die zum Offenbarungsgehalt der vorliegenden Erfindung gehören sollen, entnommen werden. Das benötigte Polyamidgranulat kann von verschiedenen Herstellern bezogen werden, beispielsweise wird Polyamid 12 Granulat von der Degussa AG unter dem Handelsnamen VESTAMID angeboten.

Das erfindungsgemäße Polymerpulver weist bezogen auf die Summe der im Pulver vorhandenen Komponenten vorzugsweise von 1 bis 30 Gew.-% zumindest eines phosphonathaltigen Flammschutzmittels, bevorzugt von 5 bis 20 Gew.-% eines phosphonathaltigen Flammschutzmittels, besonders bevorzugt von 8 bis 15 Gew.-% eines phosphonathaltigen Flammschutzmittels und ganz besonders bevorzugt von 10 bis 12 Gew.-% eines phosphonathaltigen Flammschutzmittels, auf. **

Bei einem Anteil der phosphonathaltigen Flammschutzmittel von unter 1 Gew.-% bezogen auf die Summe der im Pulver vorhandenen Komponenten nimmt der gewünschte Effekt der Schwerentflammbarkeit und schlechten Brennbarkeit deutlich ab. Bei einem Anteil des phosphonathaltigen Flammschutzmittels von über 30 Gew.-% bezogen auf die Summe der im Pulver vorhandenen Komponenten verschlechtern sich die mechanischen Eigenschaften wie z.B. der Elastizitätsmodul der aus solchen Pulvern hergestellten Formkörper deutlich.

Das im erfindungsgemäßen Polymerpulver enthaltene phosphonathaltigen Flammschutzmittel ist vorzugsweise Antiblaze 1045 oder CU, welches kommerziell verfügbar ist und bei der Rhodia bezogen werden kann.

Vorteilhaft für die Pulverauftragung auf die zu verarbeitende Schicht ist es, wenn das phosphonathaltige Flammschutzmittel die Polymerkörner umhüllt, was sich durch Nassmischen von Polymerdispersionen in einem Lösungsmittel, in welchem das phosphonathaltige Flamms̈chutzmittel zumindest eine geringe Löslichkeit aufweist, erreichen lässt, da so ausgerüstete Partikel eine besonders gute Verteilung des Flammschutzmittels aufweisen. Man kann aber auch Pulver mit in Masse eincompoundiertem phosphonatbasierendem Flammschutzmittel einsetzen und anschließend mittels Kaltvermahlung zu Pulver verarbeiten. Dem so erhaltenen Pulver können geeignete Rieselhilfen, wie pyrogenes Aluminiumoxid, pyrogenes Siliziumdioxid oder pyrogenes Titandioxid, beigegeben werden.

Erfindungsgemäßes Polymerpulver kann deshalb diese oder auch weitere Hilfsstoffe und/oder Füllstoff aufweisen. Solche Hilfsstoffe können z.B. die vorstehend genannten Rieselhilfsmittel, wie z.B. pyrogenes Siliziumdioxid oder auch gefällte Kieselsäuren sein. Pyrogenes Siliziumdioxid wird zum Beispiel unter dem Produktnamen Aerosil^{®}, mit unterschiedlichen Spezifikationen, durch die Degussa AG angeboten. Vorzugsweise weist erfindungsgemäßes Polymerpulver weniger als 3 Gew.-%, vorzugsweise von 0,001 bis 2 Gew.-% und ganz besonders bevorzugt von 0,05 bis 1 Gew.-% solcher Hilfsstoffe bezogen auf die Summe der vorhandenen Polyamide auf. Die Füllstoffe können z.B. Glas-, Metall- oder Keramikpartikel, wie z.B. massive oder hohle Glaskugeln, Stahlkugeln oder Metallgrieß oder Buntpigmente, wie z.B. Übergangsmetalloxide sein.

Die Füllstoffpartikel weisen dabei vorzugsweise eine kleinere oder ungefähr gleich große mittlere Korngröße wie die Partikel der Polyamide auf. Vorzugsweise sollte die mittlere korngröße d₅₀ der Füllstoffe die mittlere Korngröße d₅₀ der Polyamide um nicht mehr als 20 %, vorzugsweise um nicht mehr als 15 % und ganz besonders bevorzugt um nicht mehr als 5 % überschreiten. Die Partikelgröße ist insbesondere limitiert durch die zulässige Bauhöhe bzw. Schichtdicke in der schichtweise arbeitenden Apparatur.

Vorzugsweise weist erfindungsgemäßes Polymerpulver weniger als 75 Gew.-%, bevorzugt von 0,001 bis 70 Gew.-%, besonders bevorzugt von 0,05 bis 50 Gew.-% und ganz besonders bevorzugt von 0,1 bis 25 Gew.-% solcher Füllstoffe bezogen auf die Summe der vorhandenen Komponenten auf.

Beim Überschreiten der angegebenen Höchstgrenzen für Hilfs- und/oder Füllstoffe kann es, je nach eingesetztem Füll- oder Hilfsstoff zu deutlichen Verschlechterungen der mechanischen Eigenschaften von Formkörpern kommen, die mittels solcher Polymerpulver hergestellt wurden.

Die Herstellung der erfindungsgemäßen Polymerpulver ist einfach möglich und erfolgt bevorzugt gemäß dem erfindungsgemäßen Verfahren zur Herstellung von erfindungsgemäßem Polymerpulver, welches sich dadurch auszeichnet, dass zumindest ein Polyamid mit zumindest einem phosphonathaltigen Flammschutzmittel, vorzugsweise durch Nasseinmischung vermischt wird. Zum Beispiel kann ein durch Umfällung oder Vermahlung erhaltenes Polymerpulver in organischem Lösungsmittel gelöst oder suspendiert werden und mit dem phosphonathaltigen Flammschutzmittel vermischt werden oder aber das Polymerpulver kann in Masse mit phosphonathaltigen Flammschutzmittel vermischt werden. Bei dem Arbeiten in einem Lösemittel wird vorzugsweise das phosphonathaltige Flammschutzmittel in einem Lösemittel gelöst oder zumindest teilweise gelöst vorliegen, mit einer Lösung, die das Polymer aufweist, vermischt, wobei die das Polymere aufweisende Lösung das Polymer entweder gelöst aufweisen kann und das Polymerpulver durch Fällen von Polymeren aus der flammschutzmittelhaltigenhaltigen Lösung erhalten wird oder die Lösung das Polymer als Pulver suspendiert aufweisen kann und das Polymerpulver durch Entfernen des Lösemittels erhalten wird.

Eine feinteilige Vermischung kann in der einfachsten Ausführungsart des erfindungsgemäßen Verfahrens auf die verschiedensten bekannten Weisen erzielt werden. So kann das Vermischen als Naßmischung in langsamlaufenden Aggregaten - z.B. Schaufeltrockner oder umlaufenden Schneckenmischern (sog. Nautamischern) - oder durch Dispergieren des phosphonathaltigen Flammschutzmittels und des Polymerpulvers in einem organischen Lösungsmittel und anschließende destillative Entfernung des Lösungsmittels durchgeführt werden. Bei dieser Vorgehensweise ist es günstig, wenn das organische Lösungsmittel das phosphonathaltige Flammschutzmittel zumindest in geringer Konzentration löst, da bei der Trocknung das Flammschutzmittel das Polyamidkom umhüllen kann. Für diese Variante geeignete Lösemittel sind beispielsweise niedere Alkohole mit 1-3 C-Atomen, bevorzugt kann Ethanol als Lösemittel eingesetzt werden.

Das Polyamidpulver kann bei einer dieser ersten Varianten des erfindungsgemäßen Verfahrens ein bereits als Lasersinterpulver geeignetes Polyamidpulver sein, dem einfach phosphonathaltiges Flammschutzmittel zugemischt werden. Dazu ist es vorteilhaft, zumindest das Flammschutzmittel zumindest teilweise in Lösung zu bringen oder zu erwärmen, um die Viskosität zu reduzieren. In einer anderen Ausführung kann auch das Polyamidkorn in Suspension gebracht worden sein.

In einer weiteren Verfahrensvariante wird das phosphonathaltige Flammschutzmittel mit einem, vorzugsweise geschmolzenem Polyamid durch Eincompoundieren gemischt und das erhaltene flammschutzmittelhaltige Polyamid wird durch (Kalt-)-Mahlung oder Umfällung zu Lasersinterpulver verarbeitet. Üblicherweise wird bei der Compoundierung ein Granulat erhalten, welches anschließend zu Polymerpulver verarbeitet wird. Diese Umarbeitung kann z.B. durch Vermahlen oder Umfällen erfolgen. Die Verfahrensvariante, bei welcher das Flammschutzmittel eincompoundiert wird, hat gegenüber dem reinen Mischungsverfahren den Vorteil, dass eine homogenere Verteilung des phosphonathaltigen Flammschutzmittels in dem Polymerpulver erzielt wird.

In diesem Fall wird man zur Verbesserung des Rieselverhaltens eine geeignete Rieselhilfe, wie pyrogenes Aluminiumoxid, pyrogenes Siliziumdioxid oder pyrogenes Titandioxid, dem gefällten oder kaltgemahlenen Pulver zusetzen.

In einer weiteren, bevorzugten Verfahrensvariante wird das phosphonathaltige Flammschutzmittel einer ethanolischen Lösung vom Polymeren bereits beim Fällprozess dem Polymer zugemischt. Ein solcher Fällprozess ist beispielsweise in DE 35 10 687 und DE 29 06 647 beschrieben. Mittels dieses Verfahrens kann z.B. Polyamid 12 aus einer ethanolischen Lösung durch kontrollierte Abkühlung nach einem geeigneten Temperaturprogramm ausgefällt werden. Für eine detaillierte Beschreibung des Fällverfahrens wird auf DE 35 10 687 bzw. DE 29 06 647 verwiesen.

Der Fachmann kann diese Verfahrenvariante in abgewandelter Form auch ein breites Spektrum von Polymeren anwenden, wobei Polymer und Lösemittel so gewählt werden müssen, dass sich das Polymer bei einer erhöhten Temperatur in dem Lösemittel löst und dass das Polymer bei einer niedrigeren Temperatur und/oder beim Entfernen des Lösemittels aus der Lösung ausfällt. Durch Zugabe von phosphonathaltigem Flammschutzmittel zu dieser Lösung und anschließende Trocknung werden die entsprechenden erfindungsgemäßen Polymer-Lasersinterpulver erhalten.

Als phosphonathaltiges Flammschutzmittel kann vorzugsweise ein cyclische Esterstrukturen ausweisendes Phosphonat, z.B. Antiblaze 1045 ®, welches ein handelsübliches Produkte ist und bei der Fa. Rhodia bezogen werden kann, eingesetzt werden.

Zur Verbesserung der Verarbeitungsfähigkeit oder zur weiteren Modifikation des Polymerpulvers können diesem anorganische Buntpigmente, wie z.B. Übergangsmetalloxide, Stabilisatoren, wie z.B. Phenole, insbesondere sterisch gehinderte Phenole, Verlaufs- und Rieselhilfsmittel, wie z.B. pyrogene Kieselsäuren sowie Füllstoffpartikel zugegeben werden. Vorzugsweise wird, bezogen auf das Gesamtgewicht an Komponenten im Polymerpulver, soviel dieser Stoffe dem Polymerpulver zugegeben, dass die für das erfindungsgemäße Polymerpulver angegeben Konzentrationen für Füll- und/oder Hilfsstoffe eingehalten werden.

Gegenstand der vorliegenden Erfindung sind auch Verfahren zur Herstellung von Formkörpern durch selektives Lasersintern bei denen erfindungsgemäße Polymerpulver, die Polymeres und phosphonathaltige Flammschutzmittel, eingesetzt werden. Insbesondere ist Gegenstand der vorliegenden Erfindung ein Verfahren zur Herstellung von Formkörpern durch ein schichtweise arbeitendes Verfahren, bei welchen selektiv Teile aufgeschmolzen oder verbunden werden, eines phosphonathaltiges Fällpulvers auf Basis eines Polyamid 12, welches eine Schmelztemperatur von 185 bis 189 °C, eine Schmelzenthalpie von 112 ± 17 J/g und eine Erstarrungstemperatur von 136 bis 145°C aufweist und dessen Verwendung in US 6,245,281 beschrieben wird.

Diese Verfahren sind hinlänglich bekannt und beruhen auf dem selektiven Sintern von Polymerpartikeln, wobei Schichten von Polymerpartikeln kurz einem Laserlicht ausgesetzt werden und so die Polymerpartikel, die dem Laserlicht ausgesetzt waren, miteinander verbunden werden. Durch die aufeinanderfolgende Versinterung von Schichten von Polymerpartikeln werden dreidimensionale Objekte hergestellt. Einzelheiten zum Verfahren des selektiven Laser-Sinterns sind z.B. den Schriften US 6,136,948 und WO 96/06881 zu entnehmen.

Die erfindungsgemäßen Formkörper, die durch selektives Laser-Sintern hergestellt werden, zeichnen sich dadurch aus, dass sie ein phosphonathaltiges Flammschutzmittel und Polymer aufweisen. Vorzugsweise weisen die erfindungsgemäßen Formkörper zumindest ein Polyamid auf, welches pro Carbonamid-Gruppe mindestens 8 Kohlenstoffatome aufweist. Ganz besonders bevorzugt weisen erfindungsgemäße Formkörper zumindest ein Polyamid 612, Polyamid 11 und/oder ein Polyamid 12 und zumindest ein phosphonathaltiges Flammschutzmittel auf.

Andere gut geeignete Verfahren sind das SIV-Verfahren wie in WO 01/38061 beschrieben, oder ein Verfahren wie in EP 1015 214 beschrieben. Beide arbeiten mit einer flächigen Infrarotheizung zum Aufschmelzen des Pulvers, die Selektivität wird bei ersterem durch die Auftragung eines Inhibitors erreicht, beim zweiten durch eine Maske. Ein weiteres Verfahren, welches große Akzeptanz im Markt gefunden hat, ist das 3D-Printing nach EP 0 431 924; dort entstehen die Formkörper durch Aushärten eines selektiv auf die Pulverschicht aufgetragenen Binders. Ein weiteres Verfahren ist in DE 103 11 438 beschrieben; da wird die zum Verschmelzen benötigte Energie durch einen Mikrowellengenerator eingebracht und die Selektivität wird durch Auftragen eines Suszeptors erreicht

Das in dem erfindungsgemäßen Formkörper vorhandene Flammschutzmittel ist bevorzugt ein cyclisches esterstrukturen aufweisendes organisches Phosphonat. Es enthält zwischen 10 und 25 % Phosphor, besonders bevorzugt 18 bis 22 %. Ein Beispiel für ein solches Flammschutzmittel ist Antiblaze 1045 von der Fa. Rhodia.

Vorzugsweise weist der erfindungsgemäße Formkörper, bezogen auf die Summe der im Formkörper vorhandenen Komponenten, von 1 bis 50 Gew.-% an phosphonatbasierenden Flammschutzmitteln, bevorzugt von 5 bis 30 Gew.-%, besonders bevorzugt von 8 bis 20 Gew.% und ganz besonders bevorzugt von 10 bis 12 Gew.-% auf.

Die Formkörper können außerdem Füllstoffe und/oder Hilfsstoffe, wie z.B. thermische Stabilisatoren und/oder Oxidationsstabilisatoren wie z.B. sterisch gehinderte Phenolderivate aufweisen. Füllstoffe können z.B. Glas-, Keramikpartikel und auch Metallpartikel wie zum Beispiel Eisenkugeln, bzw. entsprechende Hohlkugeln sein. Bevorzugt weisen die erfindungsgemäßen Formkörper Glaspartikel, ganz besonders bevorzugt Glaskugeln auf. Vorzugsweise weisen erfindungsgemäße Formkörper weniger als 3 Gew.-%, vorzugsweise von 0,001 bis 2 Gew.-% und ganz besonders bevorzugt von 0,05 bis 1 Gew.-% solcher Hilfsstoffe bezogen auf die Summe der vorhandenen Komponenten auf. Ebenso bevorzugt weisen erfindungsgemäße Formkörper weniger als 75 Gew.-%, bevorzugt von 0,001 bis 70 Gew.-%, besonders bevorzugt von 0,05 bis 50 Gew.-% und ganz besonders bevorzugt von 0,5 bis 25 Gew.-% solcher Füllstoffe bezogen auf die Summe der vorhandenen Komponenten auf.

Die folgenden Beispiele sollen das erfindungsgemäße Polymerpulver sowie dessen Verwendung beschreiben, ohne die Erfindung auf die Beispiele einzuschränken.

Die in den nachfolgenden Beispielen durchgeführte Bestimmung der BET-Oberfläche erfolgte nach DIN 66 131. Die Schüttdichte wurde mit einer Apparatur gemäß DIN 53 466 ermittelt. Die Messwerte der Laserbeugung wurden an einem Malvern Mastersizer S, Ver. 2.18 erhalten

### Beispiel 1: Einarbeitung von Antiblaze™ 1045 durch Umfällung

40 kg ungeregeltes, durch hydrolytische Polymerisation hergestelltes PA 12 (Die Herstellung eines solchen Polyamids wird z.B. in DE2152194, DE2545267 oder DE3510690 beschrieben.) mit einer relativen Lösungsviskosität ηᵣₑₗ. von 1.61 (in angesäuertem m-Kresol) und einem Endgruppengehalt von 72mmol/kg COOH bzw. 68mmol/kg NH2 werden mit 0,3 kg IRGANOX ® 1098 und 4,44 kg Antiblaze™ 1045 sowie 350 1 Ethanol, vergällt mit 2-Butanon und 1 % Wassergehalt, innerhalb von 5 Stunden in einem 0,8 m³-Rührkessel (D = 90 cm, h=170cm) auf 145 °C gebracht und unter Rühren (Blattrührer, d = 42 cm, Drehzahl = 91 Upm) 1 Stunde bei dieser Temperatur belassen. Anschließend wird die Manteltemperatur auf 120 °C reduziert und mit einer Kühlrate von 45 K/h bei der derselben Rührerdrehzahl die Innentemperatur auf 120 °C gebracht. Von jetzt an wird bei gleicher Kühlrate die Manteltemperatur 2K bis 3 K unter der Innentemperatur gehalten. Die Innentemperatur wird mit gleicher Kühlrate auf 117 °C gebracht und dann 60 Minuten konstant gehalten. Danach wird mit einer Kühlrate von 40 K/h die Innentemperatur auf 111 °C gebracht. Bei dieser Temperatur setzt die Fällung ein, erkennbar an der Wärmeentwicklung. Nach 25 Minuten fällt die Innentemperatur ab, was das Ende der Fällung anzeigt. Nach Abkühlen der Suspension auf 75 °C wird die Suspension in einen Schaufeltrockner überführt. Das Ethanol wird daraus bei laufendem Rührwerk bei 70°C und 400mbar abdestilliert, und der Rückstand anschließend bei 20mbar und 85°C 3 Stunden nachgetrocknet. Von dem erhaltenen Produkt wurde eine Siebanalyse durchgeführt, die folgendes Ergebnis lieferte:

| | |
|---|---|
| Siebanalyse: | < 32µm: 8 Gew.-% |
| | < 40µm: 17 Gew.-% |
| | < 50µm: 46 Gew.-% |
| | < 63µm: 85 Gew.-% |
| | < 80µm: 95 Gew.-% |
| | < 100µm: 100 Gew.-% |
| BET: | 6,8m²/g |
| Schüttdichte: | 430g/l |
| Laserbeugung: | d(10%): 44µm, d(50%): 69µm, d(90%): 97µm, |

### Beispiel 2: Einarbeitung von Antiblaze™ 1045 durch Compoundierung und Umfällung

40 kg geregeltes, durch hydrolytische Polymerisation hergestelltes PA 12 (L1600) mit einer relativen Lösungsviskosität ηᵣₑₗ. von 1.61 (in angesäuertem m-Kresol) und einem Endgruppengehalt von 106 mmol/kg COOH bzw. 8 mmol/kg NH2 werden mit 0,3 kg IRGANOX ® 245 und 4,44 kg Antiblaze™ 1045 bei 225°C in einer Zweiwellen-Compoundiermaschine (Bersttorf ZE25) extrudiert und als Strang granuliert. Dieses Compound wird anschließend mit 350 1 Ethanol, vergällt mit 2-Butanon und 1 % Wassergehalt, innerhalb von 5 Stunden in einem 0,8 m³-Rührkessel (D = 90 cm, h=170cm) auf 145 °C gebracht und unter Rühren (Blattrührer, d = 42 cm, Drehzahl = 91 Upm) 1 Stunde bei dieser Temperatur belassen. Anschließend wird die Manteltemperatur auf 120 °C reduziert und mit einer Kühlrate von 45 K/h bei der derselben Rührerdrehzahl die Innentemperatur auf 120 °C gebracht. Von jetzt an wird bei gleicher Kühlrate die Manteltemperatur 2K - 3 K unter der Innentemperatur gehalten. Die Innentemperatur wird mit gleicher Kühlrate auf 117 °C gebracht und dann 60 Minuten konstant gehalten. Danach wird mit einer Kühlrate von 40 K/h die Innentemperatur auf 111 °C gebracht. Bei dieser Temperatur setzt die Fällung ein, erkennbar an der Wärmeentwicklung. Nach 25 Minuten fällt die Innentemperatur ab, was das Ende der Fällung anzeigt. Nach Abkühlen der Suspension auf 75 °C wird die Suspension in einen Schaufeltrockner überführt. Das Ethanol wird daraus bei laufendem Rührwerk bei 70°C/400mbar abdestilliert, und der Rückstand anschließend bei 20mbar/ 85°C 3 Stunden nachgetrocknet. Von dem erhaltenen Produkt wurde eine Siebanalyse durchgeführt, die folgendes Ergebnis lieferte:

| | |
|---|---|
| BET: | 7,3m²/g |
| Schüttdichte: | 418g/l |
| Laserbeugung: | d(10%): 36µm, d(50%):59µm, d(90%): 78µm, |

### Beispiel 3: Einarbeitung von Antiblaze™ 1045 in ethanolischer Suspension

Man verfährt wie in Beispiel 1 beschrieben, jedoch wird das Flammschutzmittel nicht zu Beginn zugegeben, sondern es werden 4,44 kg Antiblaze™ 1045 bei 75 °C erst nach der Fällung der fällungsfrischen Suspension im Schaufeltrockner zugesetzt. Die Trocknung sowie die weitere Aufarbeitung erfolgt wie unter Beispiel 1 beschrieben.

| | |
|---|---|
| BET: | 5,3m²/g |
| Schüttdichte: | 433g/l |
| Laserbeugung: | d(10%): 40µm, d(50%): 61µm, d(90%): 79µm, |

### Beispiel 4: Einarbeitung von Antiblaze™ 1045 in ethanolischer Suspension:

Man verfährt wie in Beispiel 3 beschrieben, setzt jedoch 4,7 kg Antiblaze™ 1045 bei 75°C der fällungsfrischen Suspension im Schaufeltrockner zu und trocknet wie unter Beispiel 1 beschrieben zu Ende.

| | |
|---|---|
| BET: | 5,1m²/g |
| Schüttdichte: | 422g/l |
| Laserbeugung: | d(10%): 45µm, d(50%): 65µm, d(90%): 84µm, |

### Beispiel 5: Einarbeitung von Antiblaze™ 1045 in ethanolischer Suspension

Man verfährt wie in Beispiel 3 beschrieben, setzt jedoch 4,21 kg Antiblaze™ 1045 bei 75°C der fällungsfrischen Suspension im Schaufeltrockner zu und trocknet wie unter Beispiel 1 beschrieben zu Ende.

| | |
|---|---|
| BET: | 5,6m²/g |
| Schüttdichte: | 437g/l |
| Laserbeugung: | d(10%): 42µm, d(50%): 55µm, d(90%): 81µm, |

### Beispiel 6: Einarbeitung von Antiblaze™ 1045 im Dry Blend

Zu 40 kg Polyamid 12-Pulver, hergestellt gemäß DE 29 06 647 mit einem mittleren Korndurchmesser d₅₀ von 53 µm (Laserbeugung) und einer Schüttdichte gemäß DIN 53466 von 443 g/l wird 4444 g (10 Gew.-%) Antiblaze™ 1045 im Dry-Blend-Verfahren unter Benutzung eines Flexomix-Mischers der Fa. Schugi bei 3000 U/min gemischt. Es handelt sich dabei um ein Fallrohr mit Durchmesser 100 mm, in dem sich ein Rotor mit Sprühdüsen bewegt. Bevorzugt wird dazu das Flammschutzadditiv erwärmt, um auf eine niedrigere Viskosität zu kommen.

### Beispiel 7: Einarbeitung von Antiblaze™ 1045 im Dry Blend

Zu 40 kg Copolyamid-Pulver (Vestamelt 470), hergestellt gemäß DE 29 06 647 mit einem mittleren Korndurchmesser d₅₀ von 78 µm (Laserbeugung) und einer Schüttdichte gemäß DIN 53466 von 423 g/l wird 4444 g (10 Gew.-%) Antiblaze^{™} 1045 im Dry-Blend-Verfahren unter Benutzung eines Flexomix-Mischers der Fa. Schugi bei 3000 U/min gemischt. Es handelt sich dabei um ein Fallrohr mit Durchmesser 100 mm, in dem sich ein Rotor mit Sprühdüsen bewegt. Bevorzugt wird dazu das Flammschutzadditiv erwärmt, um auf eine niedrigere Viskosität zu kommen.

| | |
|---|---|
| BET: | 2,2 m²/g |
| Schüttdichte: | 423g/l |
| Laserbeugung: | d(10%): 38µm, d(50%): 78µm, d(90%):122µm, |

### Beispiel 8: Vergleichsbeispiel (nicht erfindungsgemäß):

40 kg ungeregeltes, durch hydrolytische Polymerisation hergestelltes PA 12 mit einer relativen Lösungsviskosität ηᵣₑₗ. von 1.61 (in angesäuertem m-Kresol) und einem Endgruppengehalt von 72mmol/kg COOH bzw. 68mmol/kg NH2 werden mit 0,3 kg IRGANOX® 1098 in 350 1 Ethanol, vergällt mit 2-Butanon und 1 % Wassergehalt, innerhalb von 5 Stunden in einem 0,8 m³-Rührkessel (D = 90 cm, h=170cm) auf 145 °C gebracht und unter Rühren (Blattrührer, d = 42 cm, Drehzahl = 91 Upm) 1 Stunde bei dieser Temperatur belassen. Anschließend wird die Manteltemperatur auf 120 °C reduziert und mit einer Kühlrate von 45 K/h bei der derselben Rührerdrehzahl die Innentemperatur auf 120 °C gebracht. Von jetzt an wird bei gleicher Kühlrate die Manteltemperatur 2K - 3 K unter der Innentemperatur gehalten. Die Innentemperatur wird mit gleicher Kühlrate auf 117 °C gebracht und dann 60 Minuten konstant gehalten. Danach wird mit einer Kühlrate von 40 K/h die Innentemperatur auf 111 °C gebracht. Bei dieser Temperatur setzt die Fällung ein, erkennbar an der Wärmeentwicklung. Nach 25 Minuten fällt die Innentemperatur ab, was das Ende der Fällung anzeigt. Nach Abkühlen der Suspension auf 75 °C wird die Suspension in einen Schaufeltrockner überführt. Das Ethanol wird daraus bei laufendem Rührwerk bei 70°C/400mbar abdestilliert, und der Rückstand anschließend bei 20mbar/ 85°C 3 Stunden nachgetrocknet.

| | |
|---|---|
| BET: | 6,9m²/g |
| Schüttdichte: | 429g/l |
| Laserbeugung: | d(10%): 42µm, d(50%): 69µm, d(90%): 91µm |

### Weiterverarbeitung:

Alle Proben aus den Beispielen 1 bis 7 wurden in einem Mixaco-Mischer CM50 D, 150 U/min, 1 Minute lang mit 0,1 Gew.-% Aerosil 200 versetzt. Anschließend wurden mit diesen Pulvern auf einer EOSINT P360 Lasersinteranlage Schulterstäbe gemäß ISO 3167 sowie Brandschutzprüfkörper 80*3,2*10 mm gebaut. An den Bauteilen wurden mechanische Werte mittels Zugversuch nach EN ISO 527 ermittelt (Tabelle 1). Die Dichte wurde nach einem vereinfachten internen Verfahren ermittelt. Dazu werden die hergestellten Zugstäbe nach ISO 3167 (multi purpose test specimen) vermessen und daraus das Volumen berechnet, das Gewicht der Zugstäbe bestimmt und aus Volumen und Gewicht die Dichte berechnet.

**Tabelle 1: UL-Einstufung an den Proben aus den Beispielen 1-7**

| | UL-Einstufung | Elastizitätsmodul in N/mm² | Dicke in mm |
|---|---|---|---|
| Teile aus Standardpulver gemäß Beispiel 8 | Keine Einstufung | 1601 | 3,6 |
| Teile aus Beispiel 1 (Umfällung) | V0 | 1588 | 3,9 |
| Teile aus Beispiel 2 Compoudieren und Umfallen oder vermahle | V0 | 1711 | 4,0 |
| Teile aus Beispiel 3 (Susp., 10 %) | V0 | 1501 | 4,0 |
| Teile aus Beispiel 4 (Susp., 15 %) | V0 | 1454 | 4,1 |
| Teile aus Beispiel 5 (Susp., 5 %) | V2 | 1673 | 3,7 |
| Teile aus Beispiel 6 (Dry Blend) | V0 | 1632 | 3,9 |
| Teile aus Beispiel 7 (Dry Blend Copolyamid) | V0 | 1207 | 3,8 |

Wie der Tabelle 1 zu entnehmen ist, wird durch das Einmischen von phosphonathaltigem Flammschutzmittel die nachfolgend beschriebene Verbesserung erzielt. Ab einer Konzentration von 10 % des phosphonathaltigen Flammschutzmittels wird eine Einstufung nach UL V0 erzielt. Die Bauteile werden nur geringfügig dicker, was aber durch Reduktion des Energieeintrages durch den Laser korrigiert werden kann.

## Patentansprüche

1. Polymerpulver zum Verarbeiten in einem schichtweise arbeitenden selektiven LaserSintern-Verfahren, bei dem selektiv Bereiche aufgeschmolzen oder miteinander verbunden werden,
**dadurch gekennzeichnet,**
**dass** das Pulver zumindest ein Polyamidpulver und zumindest ein Flammschutzmittel, welches als Hauptbestandteil ein phosphonathaltiges Flammschutzmittel hat, aufweist, wobei das Pulver bezogen auf die Summe der im Pulver vorhandenen Komponenten von 1 bis 50 Gew.-% phosphonatbasierendes Flammschutzmittel aufweist.

2. Polymerpulver nach Anspruch 1,
**dadurch gekennzeichnet,**
**dass** es ein Polyamid aufweist, welches pro Carbonamid-Gruppe zumindest 8 Kohlenstoffatome aufweist.

3. Polymerpulver nach Anspruch 1 oder 2,
**dadurch gekennzeichnet,**
**dass** es Polyamid 612, Polyamid 11 oder Polyamid 12 oder Copolyamide basierend auf den vorgenannten Polyamiden aufweist.

4. Polymerpulver nach Anspruch 1,
**dadurch gekennzeichnet,**
**dass** das Pulver bezogen auf die Summe der im Pulver vorhandenen Komponenten von 5 bis 30 Gew.-% phosphonatbasierendes Flammschutzmittel aufweist.

5. Polymerpulver nach einem der Ansprüche 1 bis 4,
**dadurch gekennzeichnet,**
**dass** das Pulver eine Mischung des phosphonathaltigen Flammschutzmittels und Polyamidpartikeln aufweist.

6. Polymerpulver nach einem der Ansprüche 1 bis 4,
**dadurch gekennzeichnet,**
**dass** das Pulver in Polyamidpartikeln eingearbeitetes phosphonatbasierendes Flammschutzmittel aufweist.

7. Polymerpulver nach einem der Ansprüche 1 bis 6,
**dadurch gekennzeichnet,**
**dass** das Phosphonat cyclische Esterstrukturen aufweist

8. Polymerpulver nach zumindest einem der Ansprüche 1 bis 7
**dadurch gekennzeichnet,**
**dass** es zusätzlich Hilfsstoffe und/oder Füllstoff aufweist.

9. Polymerpulver nach Anspruch 8,
**dadurch gekennzeichnet,**
**dass** es als Hilfsstoff Rieselhilfsmittel aufweist.

10. Polymerpulver nach Anspruch 8,
**dadurch gekennzeichnet,**
**dass** es als Füllstoff Glaspartikel aufweist.

11. Verfahren zur Herstellung von Polymerpulver gemäß zumindest einem der Ansprüche 1 bis 10, **dadurch gekennzeichnet,**
**dass** zumindest ein Polyamidpulver mit einem phosphonathaltigem Flammschutzmittel vermischt wird.

12. Verfahren nach Anspruch 11,
**dadurch gekennzeichnet,**
**dass** durch Umfällung oder Vermahlung erhaltenes Polyamidpulver in organischem Lösungsmittel gelöst oder suspendiert oder in Masse mit dem phosphonathaltigen Flammschutzmittel vermischt wird.

13. Verfahren nach Anspruch 11,
**dadurch gekennzeichnet,**
**dass** das phosphonathaltige Flammschutzmittel in eine Schmelze des Polyamids eincompoundiert werden und das erhaltene flammschutzhaltige Granulat durch Fällung oder Vermahlung zu Polyamidpulver verarbeitet wird.

14. Verfahren nach Anspruch 11,
**dadurch gekennzeichnet,**
**dass** ein phosphonathaltiges Flammschutzmittel mit einer Lösung, die das Polyamid aufweist, vermischt wird, wobei die das Polyamid aufweisende Lösung das Polyamid entweder gelöst aufweist und das Polyamidpulver durch Fällen erhalten wird oder die Lösung das Polyamid als Pulver suspendiert aufweist und das Polyamidpulver durch Entfernen des Lösemittels erhalten wird.

15. Verfahren zur Herstellung von Formkörpern durch ein schichtweise arbeitendes selektives Laser-Sintern-Verfahren, bei dem selektiv Bereiche aufgeschmolzen oder miteinander verbunden werden, **dadurch gekennzeichnet,**
**dass** das Pulver zumindest ein Polyamidpulver und zumindest ein Flammschutzmittel, welches als Hauptbestandteil ein phosphonathaltiges Flammschutzmittel hat, aufweist und wobei das Pulver bezogen auf die Summe der im Pulver vorhandenen Komponenten von 1 bis 50 Gew.-% phosphonatbasierendes Flammschutzmittel aufweist.

16. Formkörper, hergestellt durch ein schichtweise arbeitendes Verfahren nach Anspruch 15.

17. Formkörper nach Anspruch 16,
**dadurch gekennzeichnet,**
**dass** er aus einem Polyamid besteht, welches pro Carbonamid-Gruppe zumindest 8 Kohlenstoffatome aufweist.

18. Formkörper nach Anspruch 16 oder 17,
**dadurch gekennzeichnet,**
**dass** er Polyamid 612, Polyamid 11 und/oder Polyamid 12 aufweist.

19. Formkörper nach Anspruch 16,
**dadurch gekennzeichnet,**
**dass** er bezogen auf die Summe der vorhandenen Komponenten von 5 bis 20 Gew.-% phosphonatbasierendes Flammschutzmittel aufweist.

20. Formkörper nach zumindest einem der Ansprüche 16 bis 19,
**dadurch gekennzeichnet,**
**dass** er Füllstoffe aufweist.

21. Formkörper nach Anspruch 20,
**dadurch gekennzeichnet,**
**dass** einer der Füllstoffe Glaspartikel sind.

## Claims

1. Polymer powder for processing in a layer-by-layer selective laser sintering process which selectively melts regions or selectively binds them to one another,
**characterized in that**
the powder comprises at least one polyamide powder and at least one flame retardant having a phosphonate-containing flame retardant as main constituent, where the powder comprises, based on the entirety of the components present in the powder, from 1 to 50% by weight of phosphonate-based flame retardant.

2. Polymer powder according to Claim 1,
**characterized in that**
it comprises a polyamide which has at least 8 carbon atoms per carbonamide group.

3. Polymer powder according to Claim 1 or 2,
**characterized in that**
it comprises nylon-6,12, nylon-11, or nylon-12, or copolyamides based on the abovementioned polyamides.

4. Polymer powder according to Claim 1,
**characterized in that**
the powder comprises, based on the entirety of the components present in the ponder, from 5 to 30% by weight of phosphonate-based flame retardant.

5. Polymer powder according to any of Claims 1 to 4,
**characterized in that**
the powder comprises a mixture of the phosphonate-containing flame retardant with polyamide particles.

6. Polymer powder according to any of Claims 1 to 4,
**characterized in that**
the powder comprises phosphonate-based flame retardant incorporated within polyamide particles.

7. Polymer powder according to any of Claims 1 to 6,
**characterized in that**
the phosphonate contains cyclic ester structures.

8. Polymer powder according to at least one of Claims 1 to 7,
**characterized in that**
it also comprises auxiliaries and/or filler.

9. Polymer powder according to Claim 8,
**characterized in that**
it comprises flow aids as auxiliary.

10. Polymer powder according to Claim 8,
**characterized in that**
it comprises glass particles as filler.

11. Process for producing polymer powder according to at least one of Claims 1 to 10, **characterized in that** at least one polyamide powder is mixed with a phosphonate-containing flame retardant.

12. Process according to Claim 11,
**characterized in that**
polyamide powder which has been obtained by reprecipitation or milling and has been dissolved or suspended in an organic solvent, or in bulk, is mixed with the phosphonate-containing flame retardant.

13. Process according to Claim 11,
**characterized in that**
the phosphonate-containing flame retardant is incorporated by compounding into a melt of the polyamide, and the resultant flame-retardantcontaining pellets are processed by precipitation or milling to give polyamide powder.

14. Process according to Claim 11,
**characterized in that**
a phosphonate-containing flame retardant is mixed with a solution which comprises the polyamide, where either the solution comprising the polyamide comprises the dissolved polyamide and the polyamide powder is obtained by precipitation, or the solution comprises the suspended pulverulent polyamide and the polyamide powder is obtained by removing the solvent.

15. Method for producing moldings by a layer-by-layer selective laser sintering process which selectively melts regions or selectively binds them to one another, **characterized in that**
the powder comprises at least one polyamide powder and at least one flame retardant having a phosphonate-containing flame retardant as main constituent, where the powder comprises, based on the entirety of the components present in the powder, from 1 to 50% by weight of phosphonate-based flame retardant.

16. Molding produced by a layer-by-layer process according to Claim 15.

17. Molding according to Claim 16,
**characterized in that**
it is composed of a polyamide which has at least 8 carbon atoms per carbonamide group.

18. Molding according to Claim 16 or 17,
**characterized in that**
it comprises nylon-6,12, nylon-11, and/or nylon-12.

19. Molding according to Claim 16,
**characterized in that**
it comprises, based on the entirety of the components present, from 5 to 20% by weight of phosphonate-based flame retardant.

20. Molding according to at least one of Claims 16 to 19,
**characterized in that**
it comprises fillers.

21. Molding according to Claim 20,
**characterized in that**
glass particles are one of the fillers.

## Revendications

1. Poudre polymère pour la transformation par un procédé de frittage laser sélectif fonctionnant en couches, selon lequel des zones sont sélectivement fondues ou reliées les unes aux autres, **caractérisée en ce que** la poudre comprend au moins une poudre de polyamide et au moins un agent ignifuge qui contient en tant que constituant principal un agent ignifuge contenant un phosphonate, la poudre comprenant de 1 à 50 % en poids d'agent ignifuge à base de phosphonate par rapport à la somme des composants présents dans la poudre.

2. Poudre polymère selon la revendication 1, **caractérisée en ce qu'**elle comprend un polyamide qui comprend au moins 8 atomes de carbone par groupe carbonamide.

3. Poudre polymère selon la revendication 1 ou 2, **caractérisée en ce qu'**elle comprend du polyamide 612, du polyamide 11 ou du polyamide 12 ou des copolyamides à base des polyamides susmentionnés.

4. Poudre polymère selon la revendication 1, **caractérisée en ce que** la poudre comprend de 5 à 30 % en poids d'agent ignifuge à base de phosphonate par rapport à la somme des composants présents dans la poudre.

5. Poudre polymère selon l'une quelconque des revendications 1 à 4, **caractérisée en ce que** la poudre comprend un mélange de l'agent ignifuge contenant un phosphonate et de particules de polyamide.

6. Poudre polymère selon l'une quelconque des revendications 1 à 4, **caractérisée en ce que** la poudre comprend un agent ignifuge à base de phosphonate incorporé dans des particules de polyamide.

7. Poudre polymère selon l'une quelconque des revendications 1 à 6, **caractérisée en ce que** le phosphonate comprend des structures esters cycliques.

8. Poudre polymère selon au moins l'une quelconque des revendications 1 à 7, **caractérisée en ce qu'**elle comprend également des adjuvants et/ou une charge.

9. Poudre polymère selon la revendication 8, **caractérisée en ce qu'**elle comprend des adjuvants de ruissellement en tant qu'adjuvant.

10. Poudre polymère selon la revendication 8, **caractérisée en ce qu'**elle comprend des particules de verre en tant que charge.

11. Procédé de fabrication d'une poudre polymère selon au moins l'une quelconque des revendications 1 à 10, **caractérisé en ce qu'**au moins une poudre de polyamide est mélangée avec un agent ignifuge contenant un phosphonate.

12. Procédé selon la revendication 11, **caractérisé en ce qu'**une poudre de polyamide obtenue par reprécipitation ou broyage est mélangée dissoute ou suspendue dans un solvant organique ou en masse avec l'agent ignifuge contenant un phosphonate.

13. Procédé selon la revendication 11, **caractérisé en ce que** l'agent ignifuge contenant un phosphonate est incorporé dans une masse fondue du polyamide et le granulat contenant un agent ignifuge obtenu est transformé par précipitation ou broyage en une poudre de polyamide.

14. Procédé selon la revendication 11, **caractérisé en ce qu'**un agent ignifuge contenant un phosphonate est mélangé avec une solution qui comprend le polyamide, et soit la solution comprenant le polyamide comprend le polyamide sous forme dissoute et la poudre de polyamide est obtenue par précipitation, soit la solution comprend le polyamide suspendu sous la forme de poudre et la poudre de polyamide est obtenue par élimination du solvant.

15. Procédé de fabrication de corps moulés par un procédé de frittage laser sélectif fonctionnant en couches, selon lequel des zones sont sélectivement fondues ou reliées les unes aux autres, **caractérisé en ce que** la poudre comprend au moins une poudre de polyamide et au moins un agent ignifuge qui contient en tant que constituant principal un agent ignifuge contenant un phosphonate, la poudre comprenant de 1 à 50 % en poids d'agent ignifuge à base de phosphonate par rapport à la somme des composants présents dans la poudre.

16. Corps moulé, fabriqué par un procédé fonctionnant en couches selon la revendication 15.

17. Corps moulé selon la revendication 16, **caractérisé en ce qu'**il est constitué d'un polyamide qui comprend au moins 8 atomes de carbone par groupe carbonamide.

18. Corps moulé selon la revendication 16 ou 17, **caractérisé en ce qu'**il comprend du polyamide 612, du polyamide 11 et/ou du polyamide 12.

19. Corps moulé selon la revendication 16, **caractérisé en ce qu'**il comprend de 5 à 20 % en poids d'un agent ignifuge à base de phosphonate par rapport à la somme des composants présents.

20. Corps moulé selon au moins l'une quelconque des revendications 16 à 19, **caractérisé en ce qu'**il comprend des charges.

21. Corps moulé selon la revendication 20, **caractérisé en ce qu'**une des charges est des particules de verre.
